# EUROPÄISCHE PATENTANMELDUNG

(11) **EP 3 154 069 A1**
(43) Veröffentlichungstag der Anmeldung: **12.04.2017**
(21) Anmeldenummer: 15188851.8
(22) Anmeldetag: 07.10.2015
(51) Int. Cl.: H01F 3/02, B32B 27/00, H01F 41/02, H02K 15/02

(54) **VERFAHREN UND VORRICHTUNG ZUM VERBINDEN VON BLECHTEILEN ZU BLECHPAKETEN**

(71) Anmelder: STAMPTEC-Holding GmbH, 72581 Dettingen an der Erms (DE)
(72) Erfinder: Kauffmann, Jochen, 73061 Ebersbach (DE); Lanksweirt, Jochen, 89522 Heidenheim (DE); Bursy, Heinrich, 73268 Erkenbrechtweiler (DE)
(74) Vertreter: Jell, Friedrich

(57) **Zusammenfassung**

Es wird eine Vorrichtung (1) und ein Verfahren zum Verbinden von Blechteilen (2) zu Blechpaketen (3) gezeigt, bei dem Blechteile (2) von einem Elektroband (6) mit mindestens einer, eine Matrize (15) und eine mit der Matrize (15) zusammenwirkende Schneide (13) aufweisenden Stanzstufe (17) freigestanzt werden, die freigestanzten Blechteile (2) gestapelt und zu mehreren Blechpaketen (3) zumindest stoffschlüssig verbunden werden, wobei zumindest zwischen einem ersten Blechteil (102) der gestapelten Blechteile (2) und dem ihm folgenden zweiten Blechteil (103) der gestapelten Blechteile (2) ein Trennelement (22) vorgesehen wird, um die Trennung der stoffschlüssig verbundenen Blechteile (2) in Blechpakete (3) zu erleichtern. Um die Reproduzierbarkeit des Verfahrens bei der Applikation des Trennelements zu verbessern, wird vorgeschlagen, dass nach dem Freistanzen des ersten Blechteils (102) und vor dem Freistanzen des zweiten Blechteils (103) das der Matrizengeometrie entsprechend, kleiner oder gleich ausgebildete Trennelement (22) zur Matrize (15) hingeführt, in diese Matrize (15) eingebracht und damit am ersten Blechteil (102) vorgesehen wird.

## Beschreibung

Die Erfindung betrifft eine Vorrichtung und ein Verfahren zum Verbinden von Blechteilen zu Blechpaketen, bei dem Blechteile von einem Elektroband mit mindestens einer, eine Matrize und eine mit der Matrize zusammenwirkende Schneide aufweisenden Stanzstufe freigestanzt werden, die freigestanzten Blechteile gestapelt und zu mehreren Blechpaketen zumindest stoffschlüssig verbunden werden, wobei zumindest zwischen einem ersten Blechteil der gestapelten Blechteile und dem ihm folgenden zweiten Blechteil der gestapelten Blechteile ein Trennelement vorgesehen wird, um die Trennung der stoffschlüssig verbundenen Blechteile in Blechpakete zu erleichtern.

Um die bei einem Stanzpaketieren vorverklebte oder selbst endverklebte Blechteile in Blechpakete auftrennen zu können, ist es aus dem Stand der Technik bekannt (WO2014/089593A1), zwischen zwei, in einer als Paketbremse ausgeführten Stapeleinrichtung eines Folgestanzwerkzeugs gestapelten Blechteilen ein Trennelement vorzusehen. Dies geschieht, indem vor dem Folgestanzwerkzeug eine Trennfolie als planes Trennelement auf das Elektroband bereichsweise auflaminiert vorgesehen wird - welches Trennelement auf dem freigestanzten Blechteil als Trennhilfe zwischen in der Stapeleinrichtung aneinander anschließenden Blechpaketen dient. Nachteilig bedarf es bei der Applizierung des Trennelements einer exakten Positionierung in Hinblick auf jenes abzutrennende Blechteil, das als Ende oder als Anfang eines Blechpakets die Teilung der Blechpakete in der Paketbremse markiert. Dieses Verfahren ist verfahrenstechnisch somit vergleichsweise aufwendig. So bedarf es unter anderem diverse Steuerungs- und/oder Regelkreise, um beispielsweise Abweichungen im Vorschub des Elektrobands kompensieren zu können - was eine Voraussetzung für den Erhalt formgenauer Blechpakete ist.

Die Erfindung hat sich daher die Aufgabe gestellt, ein Verfahren der eingangs geschilderten Art derart zu verbessern, dass die Applikation eines Trennelements einfach handzuhaben und besonders reproduzierbar erfolgen kann.

Die Erfindung löst die gestellte Aufgabe hinsichtlich des Verfahrens dadurch, dass nach dem Freistanzen des ersten Blechteils und vor dem Freistanzen des zweiten Blechteils das der Matrizengeometrie entsprechend, kleiner oder gleich ausgebildete Trennelement zur Matrize hingeführt, in diese Matrize eingebracht und damit am ersten Blechteil vorgesehen wird.

Wird nach dem Freistanzen des ersten Blechteils und vor dem Freistanzen des zweiten Blechteils das der Matrizengeometrie entsprechend, kleiner oder gleich ausgebildete Trennelement zur Matrize hingeführt, in diese Matrize eingebracht und damit am ersten Blechteil vorgesehen, kann eine verfahrenstechnisch besonders einfache und reproduzierbare Lösung zur Applikation eines Trennelements zwischen zwei Blechteilen geschaffen werden. Es ist nämlich nach Erreichen einer vorgegeben Stapelhöhe am Blechpaket auf dessen oberen Blechteil zuverlässig ein Trennelement applizierbar, bevor das untere Blechteil eines daran anschließenden Blechpakets aus dem Elektroband ausgestanzt wird. Außerdem kann das Verfahren durch diese Veränderung der Applikation des Trennelements zwischen dem letzten Stanzschritt für das Blechteil des einen Blechpakets und dem ersten Stanzschritt für das Blechteil des daran anschließenden anderen Blechpakets von eventuell vorhandenen Toleranzen beim Paketierverfahren bzw. Stanzpaketierverfahren entkoppelt werden - beispielsweise im Zuge des Vorschiebens des Blechs, was bei gegenüber der Erfindung bei früher erfolgendem Verfahrensschritt der Aufbringung eines Trennelements besonders hohe Relevanz hat. Auf diese Weise wird also ein äußerst zuverlässiges und genaues Trennen der Blechpakete gewährleistbar. Derartig hergestellte Blechpakete, insbesondere Elektroblechpakete, sind daher für elektrische Maschinen sowie für elektrische bzw. elektromagnetische Anwendungen besonders gut geeignet.

Im Allgemeinen wird erwähnt, dass es sich beim Trennelement beispielsweise um eine plane Scheibe aus Kunststoff oder aus einem anderen Material handeln kann. Auch ein gitterartiges Trennelement ist vorstellbar, um die Funktion des Trennelements als Inlay zwischen den Blechteilen erfüllen zu können, die Trennung der stoffschlüssig verbundenen Blechteile in Blechpakete zu erleichtern. Im Allgemeinen wird weiter erwähnt, dass es sich beim Elektroband um ein Halbzeug aus Stahl, beispielsweise als kaltgewalztes nicht kornorientiertes Elektroband im schlussgeglühten Zustand (DIN EN10106) oder als kornorientiertes Elektroband im schlussgeglühten Zustand (DIN EN10107) ausgeführt, handeln kann.

Wird das Elektroband von der zum Freistanzen vorgesehenen Matrize abgehoben und danach das Trennelement unter dem abgehobenen Elektroband zur Matrize hingeführt, ist zudem das Führen bzw. Einbringen des Trennelements in die Matrize vergleichsweise einfach und zuverlässig möglich, was zur Erleichterung der Handhabung des Verfahrens beitragen kann.

Das Verfahren kann weiter vereinfacht werden, wenn das Trennelement in die Matrize hinein fallengelassen wird. Zudem kann auf diese Weise die Gefahr von Beschädigungen an der Matrize durch Führungselemente zuverlässig vermeiden und in weiterer Folge die Standfestigkeit des Verfahrens erhöht werden.

Vor allem auch ein Verkanten des Trennelements beim Einlegen in die Matrize kann vermieden werden, wenn das in die Matrize eingebrachte Trennelement ein seitliches Spiel zu dieser ausbildet. Die Handhabung des Verfahrens kann sich dadurch erleichtern. Zudem kann durch das im Vergleich zur Matrizenöffnung kleinere Trennelement die Gefahr einer Beschädigung der Innenwand der Matrize durch Randkanten am Trennelement verringert werden. Dies kann aber auch die, die Matrize verlassenden Blechpakete vor Schleifspuren schützen - bzw. auch vor anderen unerwünschten Beschädigungen, die von der Matrize auf die Blechteile übertragen werden. Die Reproduzierbarkeit des erfindungsgemäßen Verfahrens kann damit weiter erhöht werden.

Wird das Elektroband vor dem Freistanzen wenigstens bereichsweise mit einer aushärtbaren, polymeren Klebstoffschicht beschichtet, kann beim Freistanzen auf einfache Weise für ein ausreichendes Pressen der Blechteile und damit einem reproduzierbaren Verbinden bzw. Vorverbinden der Blechteile zu Blechpakete erreicht werden.

Werden die Blechteile aus dem Elektroband folgegestanzt, kann das Verfahren besonders kostengünstig herzustellende Blechpakete ermöglichen.

Der Verfahrensschritt des Abhebens des Blechbands von der Matrize kann sich erleichtern, wenn die Vorschubrichtungen des zur Matrize hin geführten Trennelements und des Elektrobands in der Stanzstufe horizontal geneigt zueinander verlaufen. Insbesondere wenn die beiden Vorschubrichtungen normal zueinander verlaufen, kann insgesamt der abzuhebende Bandabschnitt klein gehalten und also die Gefahr einer Beschädigung des Blechbands durch die Stanzstufe bzw. Stanzstufen des Stanzwerkzeugs verringert werden. Die erfindungsgemäßen Verfahrensschritte zum Einbringen eines Trennelements sich daher vorteilhaft auf die Reproduzierbarkeit des Verfahrens auswirken.

Um das Trennelement vom jeweiligen Blechpaket einfach entfernen zu können, kann vorgesehen sein, dass das Trennelement zumindest auf einer seiner Breitseiten mit einer Antihaftbeschichtung versehen wird. Diese Antihaftbeschichtung kann beispielsweise als Silikon- oder Teflon-Beschichtung ausgeführt sein.

Die Erfindung hat sich außerdem die Aufgabe gestellt, eine Vorrichtung zum Verbinden von Blechteilen zu einem Blechpaket derart konstruktiv zu verändern, dass die verbundenen Blechteile an der vorgegebenen Stelle zuverlässig in Blechpakete getrennt werden können, um besonders exakte Blechpakete zu gewährleisten. Zudem soll die Vorrichtung konstruktiv einfach ausgebildet sein.

Die Erfindung löst die gestellte Aufgabe hinsichtlich der Vorrichtung dadurch, dass die Zuführeinrichtung einen zur Matrize hin- und zurückbewegbaren Förderer mit einem Haltemittel für das Trennelement aufweist, welcher Förderer zum Einbringen des Trennelements in die Matrize ausgebildet ist.

Weist die Zuführeinrichtung einen zur Matrize hin- und zurückbewegbaren Förderer mit einem Haltemittel für das Trennelement auf, welcher Förderer zum Einbringen des Trennelements in die Matrize ausgebildet ist, kann sich eine konstruktiv einfache Lösung ergeben, mit der ein Trennelement am ersten Blechteil zuverlässig vorsehbar ist. Die erfindungsgemäße Vorrichtung kann daher nicht nur reproduzierbar exakte Blechpakete zur Verfügung stellen, sondern kann auch konstruktiv besonders einfach ausgeführt sein.

Weist die Zuführeinrichtung eine Hubeinrichtung zum Abheben des Elektrobands von der Matrize auf, kann damit nicht nur eine sichere Zugangsmöglichkeit zur Matrize ermöglicht werden, sondern auch eine, durch das Einbringen des Trennelements bedingte Beschädigungsgefahr am Elektroband gering gehalten werden, wenn der Förderer unterhalb des abgehobenen Elektrobands zur Matrize hin- und zurückbewegbar ausgebildet ist.

Die Konstruktion der Vorrichtung kann weiter vereinfacht werden, wenn der Förderer einen, insbesondere linear verfahrbaren, Schieber aufweist, der das Haltemittel aufweist. Zudem kann der Schieber so den notwendigen Abstand zwischen Matrize und Blechband gering halten, was die Beschädigungsgefahr des Elektrobands beispielsweise an der Stanzstufe weiter verringern kann.

Das Trennelement kann zuverlässig am Schieber gehalten werden, wenn das Haltemittel von einer an das Trennelement formschlüssig anlegbaren Aufnahme am Schieber ausgebildet wird.

Verlaufen die Vorschubrichtungen des Elektrobands und des Förderers zur Matrize hin horizontal geneigt, insbesondere normal, zueinander, kann der konstruktive Aufwand zum Erhalt einer getrennten Führung von Elektroband und Endlosband weiter vermindert werden.

Die Standfestigkeit der erfindungsgemäßen Vorrichtung kann erhöht werden, wenn die Zuführeinrichtung einen Spender mit mehreren Trennelementen aufweist, der mit dem Förderer zur Entnahme von Trennelementen verbunden ist.

Ein Verkanten des Trennelements an der Matrize kann vermieden werden, wenn das in der Matrize eingesetzte Trennelement ein seitliches Spiel zur dieser aufweist. Die Standfestigkeit der Vorrichtung kann damit weiter erhöht werden.

In den Figuren ist beispielsweise der Erfindungsgegenstand anhand einer Ausführungsvariante dargestellt. Es zeigen
- Fig. 1: eine schematische Ansicht auf eine Vorrichtung zur Bleckpaketierung gemäß einem Paketierverfahren,
- Fig. 2: eine Schnittansicht der Fig. 1 nach II-II und
- Fig. 3: eine abgerissene Draufsicht auf das Folgestanzwerkzeug der Vorrichtung nach Fig. 1 ohne dessen Oberwerkzeug und Elektroband.

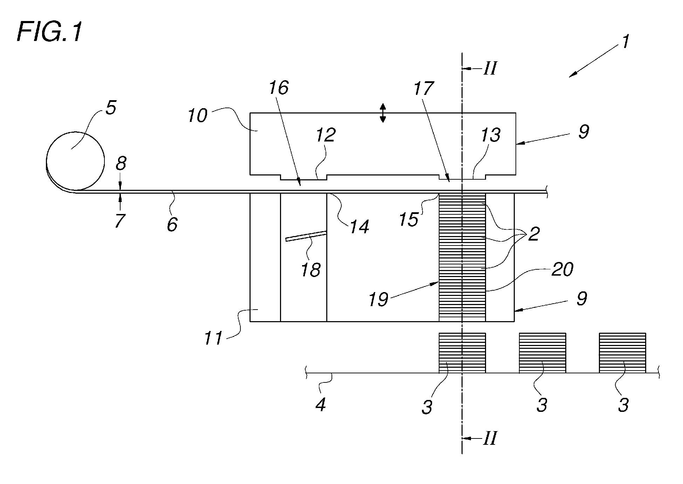

Gemäß dem Ausführungsbeispiel in Fig. 1 wird eine Vorrichtung 1 zur Durchführung des erfindungsgemäßen Verfahrens bzw. Paketierverfahren, insbesondere Stanzpaketierverfahrens, schematisch dargestellt. Diese Vorrichtung 1 dient zum Paketieren von freigestanzten Blechteilen 2 zu Blechpaketen 3, die nach Fig. 1 mithilfe eines Förderbands 4 von der Vorrichtung 1 weitertransportiert werden.

Für das Verfahren wird von einem Coil 5 ein Elektroband 6 abgehaspelt, welches auf beiden Bandseiten 7, 8 eine vollflächige polymere Klebstoffschicht, nämlich einen heißhärtenden Backlack, aufweist. Von diesem backlackbeschichteten Elektroband 6 werden mithilfe eines Stanzwerkzeugs 9, das als Folgestanzwerkzeug ausgebildet ist, mehrere Blechteile 2 freigestanzt. Solch ein Freigestanzten kann - im Allgemeinen erwähnt - ein Ausschneiden, Abschneiden, Ausklinken, Beschneiden, Zerteilen durch Ausdrücken etc. sein.

Wie außerdem in der Fig. 1 zu entnehmen, führt das Stanzwerkzeug 9 ein Schneiden mit mehren Hüben durch, indem sein Oberwerkzeug 10 mit seinem Unterwerkzeug 11 zusammenwirkt. Mit einer ersten Schneide 12 des Oberwerkzeugs 10 wird das Elektroband 6 für ein Freistanzen vorbearbeitet, wonach mit einer zweiten Schneide 13 des Oberwerkzeugs 10 aus dem Elektroband 6 das Blechteil 2 freigestanzt bzw. damit vereinzelt wird. Hierzu wirken die Schneiden 12, 13 mit den jeweiligen Matrizen 14, 15 des Unterwerkzeugs 11 zusammen, wodurch sich am Stanzwerkzeug 9 zwei Stanzstufen 16, 17 ausbilden.

Das Folgeschneiden des Stanzwerkzeugs 9 ist in der Fig. 1 beispielsweise daran zu erkennen, dass beim Vorbearbeiten ein Teil 18 vom Elektroband 6 abgetrennt wird. Danach werden die Blechteile 2 mithilfe der Stanzstufe 17 freigestanzt, durch Druck des Oberwerkzeugs 10 in eine Stapeleinrichtung 19 gedrängt und dort gestapelt. Diese an die Matrize 15 anschließende Stapeleinrichtung 19 wird auf konstruktiv einfache Weise von einer Führung 20 im Unterwerkzeug 11 ausgebildet, welche Führung 20 sich außerdem bereichsweise verjüngt, um damit die Funktion einer Paketbremse auf die Blechteile 2 in der Stapeleinrichtung 19 zu erfüllen und eine Druckbelastung gegen das Oberwerkzeug 10 auszuüben. Damit können die Blechteile 2 mithilfe der zwischen den Blechteilen 2 vorhandenen polymeren Klebstoffschicht eine feste physikalisch und/oder chemisch stoffschlüssige Verbindung eingehen.

Im Allgemeinen wird erwähnt, dass die Stapeleinrichtung 19 auch aktiv beheizt werden kann, um die stoffschlüssige Verbindung der Blechteile 2 zu verbessern. Außerdem können die Blechpakete 3 nicht näher dargestellten, weiteren Aushärtungsschritten unterworfen werden, um die stoffschlüssige Verbindung zwischen den Blechteilen 2 zu stärken. Nicht näher dargestellt ist außerdem die Möglichkeit einer Drehung der Stapeleinrichtung 19 - um beispielsweise segmentierte Blechpakete 3 aus Lagen mit mehreren nebeneinander angeordneten und übereinander gestapelten Blechteilen 2 auszubilden. Im Allgemeinen wird erwähnt, dass - ebenso nicht dargestellt - alternativ zur Verjüngung auch ein Gegenhalter in der Führung vorstellbar ist, der einen entsprechenden Gegendruck zum stoffschlüssigen Verbinden der Blechteile 2 ausübt.

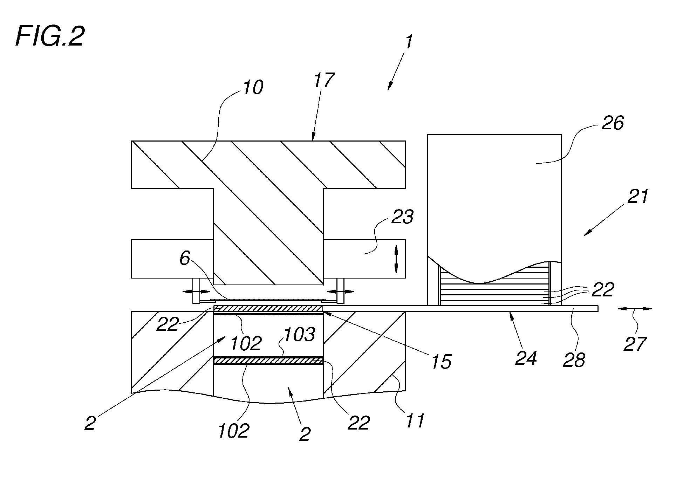

Um die, die Stapeleinrichtung 19 verlassenden Blechpakete 3 leichter voneinander trennen zu können, wird zumindest zwischen zwei gestapelten Blechteilen 2 über eine Zuführeinrichtung 21 ein planes Trennelement 22 vorgesehen. Dies ist beispielsweise in Fig. 2 daran zu erkennen, dass sich mittig der Stapeleinrichtung 19 zwischen einem ersten Blechteil 102 der gestapelten Blechteile 2 und einem daran anschließenden zweiten Blechteil 103 der gestapelten Blechteile 2 ein planes Trennelement 22, beispielsweise eine Kunststoffscheibe, befindet.

Das Vorsehen des Trennelements 22 wird durch die Zuführeinrichtung 21 ermöglicht, indem wie dargestellt eine Hubeinrichtung 23 das Elektroband 6 von der Matrize 15 abhebt, wodurch die Matrize 15 der Stanzstufe 17 zugänglich wird. Ein unterhalb des abgehobenen Elektrobands 6 zur Matrize 15 hin- und zurückbewegbaren Förderer 24 der Zuführeinrichtung 21 nutzt dies, mithilfe seines Haltemittels 25 ein Trennelement 22 in die Stanzstufe 17 bzw. in dessen Matrize 15 einzubringen. Dies ist deshalb möglich, weil das Trennelement in seinen seitlichen Abmessungen der Matrizengeometrie 115 entsprechend, kleiner oder gleich ausgebildet ist und sohin in die Matrize 15 auch eingebracht werden kann.

Dieses Trennelement 22 wird vom Förderer 24 nach Bedarf von einem Spender 26 entnommen. Damit wird zuverlässig auf das diesbezüglich erste Blechteil 102 der in der Stapeleinrichtung 19 gestapelten Blechteile 2 ein Trennelement 22 vorgesehen, welches Trennelement 22 sich somit nach dem Freistanzen eines zweiten Blechteils 103 stets reproduzierbar an der gewünschten Trennstelle zwischen den angrenzenden Blechpaketen 3 befindet. Erfindungsgemäß ist damit eine zuverlässige und reproduzierbare Teilung der gestapelten, stoffschlüssig verbundenen Blechteile 2 in präzise Blechpakete 3 geschaffen - insbesondere auch dort, wo die Blechteile 2 die Stapeleinrichtung 19 verlassen und beispielsweise zum Weitertransport auf einem Förderband 4 vorgesehen werden.

Der Förderer 24 weist einen linear entlang einer Vorschubrichtung 27 hin und her verfahrbaren Schieber 28 auf, der eine halbkreisförmige Aufnahme 29 für das Trennelement 22 ausbildet und hierzu am Trennelement 22 abschnittsweise formschlüssig anliegt. Ein sicheres und einfach durchzuführendes Verschieben des Trennelements 22 vom Spender 26 zur Matrize 15 hin ist auf diese Weise sichergestellt.

Befindet sich das zur Matrize 15 hin verschobene Trennelement 22 über der Matrize 15 wird dieses vom Förderer 24 losgelassen, der formschlüssige Verbund zwischen den beiden wird als gelöst - und folglich in die Matrize 15 hinein fallengelassen, womit ein Einfahren des Förderers in die Matrize 15 vermieden wird. So wird unter anderem die Gefahr von Beschädigungen an der Matrize 15 durch den Förderer 24 vermieden. Diese Vorteile werden weiter verbessert, indem das Trennelement 22 in seinen Abmessungen derart ausgeführt, dass sich ein seitliches Spiel 30 zwischen Matrize 15 und dem darin eingesetzten Trennelement 22 gegeben ist. Dadurch kann beispielsweise beim Einbringen des Trennelements 22 dessen Verkanten an der Matrize 15 sicher verhindert werden, ohne dass die gewünschte Trennung der Blechpakete 3 beeinträchtigt würde.

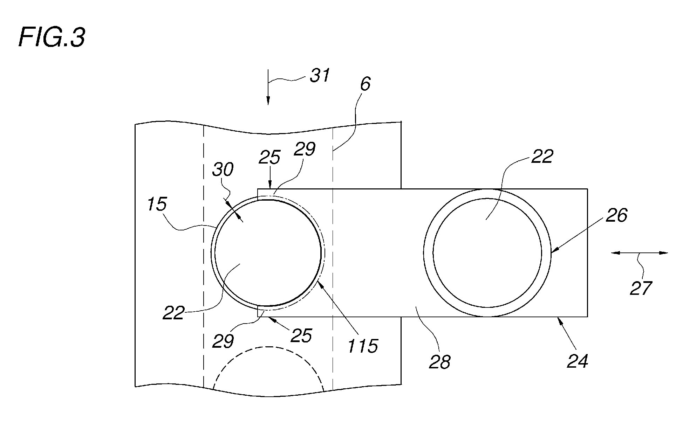

Fig. 3 ist auch zu entnehmen, dass die Vorschubrichtung 27 des Förderers 24 zur Matrize 15 hin bzw. zurück und die Vorschubrichtung 31 des Elektrobands 6 horizontal normal zueinander verlaufen. Dies erleichtert das seitliche Vorsehen der Zuführeinrichtung 21 bei der Stanzstufe 17 und führt zu einer kompakten Vorrichtung.

## Patentansprüche

1. Verfahren zum Verbinden von Blechteilen (2) zu Blechpaketen (3), bei dem Blechteile (2) von einem Elektroband (6) mit mindestens einer, eine Matrize (15) und eine mit der Matrize (15) zusammenwirkende Schneide (13) aufweisenden Stanzstufe (17) freigestanzt werden, die freigestanzten Blechteile (2) gestapelt und zu mehreren Blechpaketen (3) zumindest stoffschlüssig verbunden werden, wobei zumindest zwischen einem ersten Blechteil (102) der gestapelten Blechteile (2) und dem ihm folgenden zweiten Blechteil (103) der gestapelten Blechteile (2) ein Trennelement (22) vorgesehen wird, um die Trennung der stoffschlüssig verbundenen Blechteile (2) in Blechpakete (3) zu erleichtern, **dadurch gekennzeichnet, dass** nach dem Freistanzen des ersten Blechteils (102) und vor dem Freistanzen des zweiten Blechteils (103) das der Matrizengeometrie entsprechend, kleiner oder gleich ausgebildete Trennelement (22) zur Matrize (15) hingeführt, in diese Matrize (15) eingebracht und damit am ersten Blechteil (102) vorgesehen wird.

2. Verfahren nach Anspruch 1, **dadurch gekennzeichnet, dass** das Elektroband (6) von der zum Freistanzen vorgesehenen Matrize (15) abgehoben und danach das Trennelement (22) unter dem abgehobenen Elektroband (6) zur Matrize (15) hingeführt wird.

3. Verfahren nach Anspruch 1 oder 2, **dadurch gekennzeichnet, dass** das Trennelement (22) in die Matrize (15) hinein fallengelassen wird.

4. Verfahren nach Anspruch 1, 2 oder 3, **dadurch gekennzeichnet, dass** das in die Matrize (15) eingebrachte Trennelement (22) ein seitliches Spiel zu dieser ausbildet.

5. Verfahren nach einem der Ansprüche 1 bis 4, **dadurch gekennzeichnet, dass** die Blechteile (2) aus dem Elektroband (6) folgegestanzt werden.

6. Verfahren nach einem der Ansprüche 1 bis 5, **dadurch gekennzeichnet, dass** das Elektroband (6) vor dem Freistanzen wenigstens bereichsweise mit einer aushärtbaren, polymeren Klebstoffschicht beschichtet wird.

7. Verfahren nach einem der Ansprüche 1 bis 6, **dadurch gekennzeichnet, dass** die Vorschubrichtungen (27, 31) des zur Matrize (15) hin geführten Trennelements (22) und des Elektrobands (6) in der Stanzstufe (17) horizontal geneigt, insbesondere normal, zueinander verlaufen.

8. Verfahren nach einem der Ansprüche 1 bis 7, **dadurch gekennzeichnet, dass** das Trennelement (22) zumindest auf einer seiner Breitseiten mit einer Antihaftbeschichtung versehen wird.

9. Vorrichtung zum Verbinden von Blechteilen (2) zu einem Blechpaket (3) mit einem mindestens eine Stanzstufe (16, 17) aufweisenden Stanzwerkzeug (9), dessen Stanzstufe (17) eine Matrize (15) und eine mit der Matrize (15) zusammenwirkende Schneide (13) zum Freistanzen eines Blechteils (2) aus einem Elektroband (6) aufweist, mit einer an die Matrize (14, 15) anschließenden Stapeleinrichtung (19) zum Stapeln und zumindest stoffschlüssigen Verbinden freigestanzter Blechteile (2) zu mehreren Blechpaketen (3) und mit einer Zuführeinrichtung (21) zum Vorsehen eines Trennelements (22) zwischen einem ersten der in Stapeleinrichtung (19) gestapelten Blechteile (102) und dem ihm folgenden zweiten in der Stapeleinrichtung (19) gestapelten Blechteile (103), **dadurch gekennzeichnet, dass** die Zuführeinrichtung (21) einen zur Matrize (15) hin- und zurückbewegbaren Förderer (24) mit einem Haltemittel (25) für das Trennelement (22) aufweist, welcher Förderer (24) zum Einbringen des Trennelements (22) in die Matrize (15) ausgebildet ist.

10. Vorrichtung nach Anspruch 9, **dadurch gekennzeichnet, dass** die Zuführeinrichtung (21) eine Hubeinrichtung (23) zum Abheben des Elektrobands (6) von der Matrize (15) aufweist und dass der Förderer (24) unterhalb des abgehobenen Elektrobands (6) zur Matrize (15) hin- und zurückbewegbar ausgebildet ist.

11. Vorrichtung nach Anspruch 9 oder 10, **dadurch gekennzeichnet, dass** der Förderer (24) einen, insbesondere linear verfahrbaren, Schieber (28) aufweist, der das Haltemittel (25) aufweist.

12. Vorrichtung nach Anspruch 11, **dadurch gekennzeichnet, dass** das Haltemittel (25) von einer an das Trennelement (22) formschlüssig anlegbaren Aufnahme (29) am Schieber (28) ausgebildet wird.

13. Vorrichtung nach einem der Ansprüche 9 bis 11, **dadurch gekennzeichnet, dass** die Vorschubrichtungen (27, 31) des Elektrobands (6) und des Förderers (24) zur Matrize (15) hin horizontal geneigt, insbesondere normal, zueinander verlaufen.

14. Vorrichtung nach einem der Ansprüche 9 bis 12, **dadurch gekennzeichnet, dass** die Zuführeinrichtung (21) einen Spender (26) mit mehreren Trennelementen (22) aufweist, der mit dem Förderer (24) zur Entnahme von Trennelementen (22) verbunden ist.

15. Vorrichtung nach einem der Ansprüche 9 bis 13, **dadurch gekennzeichnet, dass** das in der Matrize (15) eingesetzte Trennelement (22) ein seitliches Spiel (30) zur dieser aufweist.
